(19) Europäisches Patentamt
European Patent Office
Office européen des brevets

(11) **EP 3 623 768 A1**

(12) **EUROPEAN PATENT APPLICATION**
published in accordance with Art. 153(4) EPC

(43) Date of publication:
**18.03.2020 Bulletin 2020/12**

(21) Application number: **18798977.7**

(22) Date of filing: **16.04.2018**

(51) Int Cl.:
*G01D 5/244* (2006.01)      *G01D 21/00* (2006.01)
*H02M 7/06* (2006.01)

(86) International application number:
**PCT/JP2018/015757**

(87) International publication number:
**WO 2018/207561 (15.11.2018 Gazette 2018/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.05.2017 JP 2017092715**

(71) Applicant: **Panasonic Intellectual Property
Management Co., Ltd.
Osaka-shi, Osaka 540-6207 (JP)**

(72) Inventors:
• **KONISHI, Toshihiro**
**Osaka-shi**
**Osaka 540-6207 (JP)**
• **HIRAISHI, Naoya**
**Osaka-shi**
**Osaka 540-6207 (JP)**
• **KATSUMURA, Hidenori**
**Osaka-shi**
**Osaka 540-6207 (JP)**

(74) Representative: **Grünecker Patent- und
Rechtsanwälte
PartG mbB
Leopoldstraße 4
80802 München (DE)**

(54) **POWER SUPPLY DEVICE AND SENSOR DEVICE USING SAME**

(57)    A power supply device includes an oscillator configured to output an alternating-current (AC) signal in accordance with strength of an external force, a rectifying output unit configured to convert the AC signal to a first signal which is a pulsating current, a rectifying-smoothing output unit configured to convert the AC signal to a second signal which is closer to a direct current than the first signal is, a starter unit configured to output a start-up signal, and a controller starting up in response to the start-up signal. The starter unit includes a first terminal electrically connected to the rectifying output unit, and a second terminal electrically connected to the rectifying-smoothing output unit. The starter unit outputs the start-up signal when a voltage applied to the first terminal is equal to or higher than a voltage applied to the second terminal. The power supply device reliably starts up the controller.

FIG. 1

**Description**

TECHNICAL FIELD

The present invention relates to a power supply device for use in electronic equipment, and to a sensor device including the power supply device.

BACKGROUND ART

A conventional power supply device includes an oscillator, a rectifying unit, a starter unit, and a controller. The oscillator outputs an alternating-current (AC) signal in accordance with an external force. The rectifying unit is electrically connected to the oscillator. The AC signal output from the oscillator is converted to a direct-current (DC) signal. The starter unit has a first terminal and a second terminal. The first terminal is electrically connected to the rectifying unit. A voltage clamped to a constant value is applied to the second terminal. The starter unit is electrically connected to the controller. The starter unit starts up the controller when the voltage applied to the second terminal is higher than the voltage applied to the first terminal.

A conventional power supply device similar to the above-described power supply devices is disclosed in, e.g. PTL 1.

CITATION LIST

PATENT LITERATURE

PTL 1: Japanese Patent Laid-Open Publication No. 2008-186336

SUMMARY

A power supply device includes an oscillator configured to output an alternating-current (AC) signal in accordance with strength of an external force, a rectifying output unit configured to convert the AC signal to a first signal which is a pulsating current, a rectifying-smoothing output unit configured to convert the AC signal to a second signal which is closer to a direct current than the first signal is, a starter unit configured to output a start-up signal, and a controller starting up in response to the start-up signal. The starter unit includes a first terminal electrically connected to the rectifying output unit, and a second terminal electrically connected to the rectifying-smoothing output unit. The starter unit outputs the start-up signal when a voltage applied to the first terminal is equal to or higher than a voltage applied to the second terminal.

The power supply device reliably starts up the controller.

BRIEF DESCRIPTION OF DRAWINGS

FIG. 1 is a circuit diagram of a power supply device according to an exemplary embodiment.
FIG. 2 is a circuit diagram of a sensor device according to the embodiment.
FIG. 3 illustrates an operation of the sensor device according to the embodiment.

DETAIL DESCRIPTION OF PREFERRED EMBODIMENTS

(Power Supply Device 100)

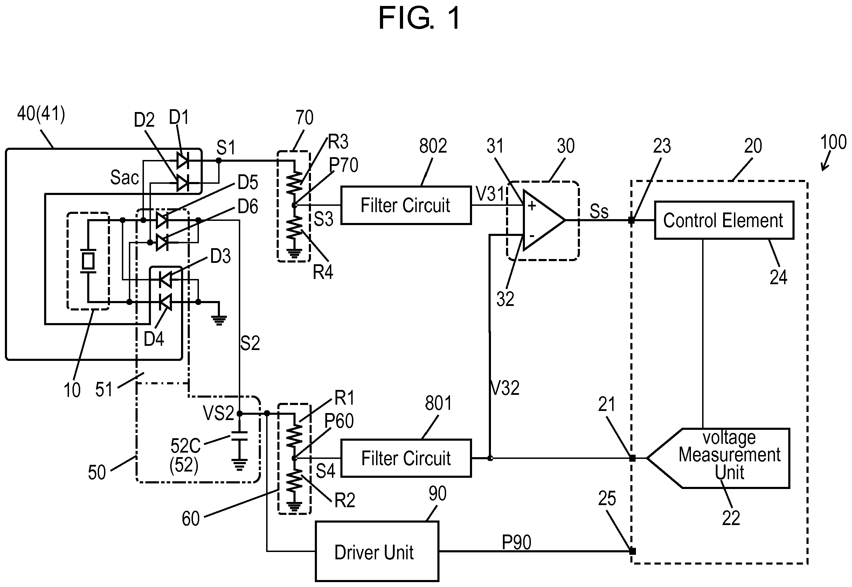

FIG. 1 is a circuit diagram of power supply device 100 according to an exemplary embodiment. Power supply device 100 includes oscillator 10, controller 20, starter unit 30, rectifying output unit 40, and rectifying-smoothing output unit 50.

Oscillator 10 generates an alternating-current (AC) signal Sac in accordance with an external force. Controller 20 is electrically connected to oscillator 10.

Starter unit 30 includes terminals 31 and 32. Terminal 31 is electrically connected to oscillator 10. Terminal 32 is electrically connected to oscillator 10.

Rectifying output unit 40 is electrically connected between terminal 31 and oscillator 10. Rectifying-smoothing output unit 50 is electrically connected between terminal 32 and oscillator 10. That is, rectifying-smoothing output unit 50 and rectifying output unit 40 are electrically in parallel with each other.

An operation of power supply device 100 will be described below. Oscillator 10 generates an alternating-current (AC) signal Sac in accordance with an external force applied thereto, and outputs the AC signal . AC signal Sac is input to rectifying output unit 40 and rectifying-smoothing output unit 50.

Rectifying output unit 40 converts AC signal Sac to signal S1. Signal S1 has a polarity remaining constant while having amplitude thereof changing. That is, signal S1 is a pulsating current. The period of fluctuation of signal S1 may be either constant or variable. Rectifying output unit 40 outputs signal S1 to terminal 31.

Rectifying-smoothing output unit 50 converts AC signal Sac to signal S2. Signal S2 has a constant polarity, and has amplitude changing less than signal S1. That is, signal S2 is closer to a direct current than signal S1 is. Here, the description "signal S2 is closer to a direct current than signal S2 is" means that signal S2 contains a larger direct current than signal S1. Signal S2 may contain ripples. Rectifying-smoothing output unit 50 outputs signal S2 to terminal 32.

Starter unit 30 compares voltage V31 applied to terminal 31 with voltage V32 applied to terminal 32. When determining that voltage V31 is determined is equal to or higher than voltage V34, starter unit 30 starts up controller 20.

Both terminals 31 and 32 of starter unit 30 are electrically connected to oscillator 10. A circuit from oscillator 10 to terminal 31 is different from a circuit from oscillator 10 to terminal 32. For this reason, voltage V32 applied to terminal 32 has a correlation with voltage V31 applied to terminal 31. That is, in power supply device 100, voltage V32 input to terminal 32 varies in accordance with voltage V31 applied to terminal 31.

In the conventional power supply device described earlier, the voltage applied to the second terminal is clamped to a predetermined value. Thus, the voltage applied to the second terminal cannot be changed in accordance with the voltage applied to the first terminal. For this reason, the starter unit may not start up the controller.

In power supply device 100 according to the embodiment, voltage V32 input to terminal 32 is variable, hence allowing controller 20 to start up reliably.

The terms "electrically connected" used herein means that components are connected so as to mutually exchange electric signals. That is, examples of the configuration in which components are "electrically connected" include: a configuration in which plural electronic components are connected with conductive wires; a configuration in which electric signals are exchanged by generating a current induced in a transformer; and a configuration in which an electric signal is exchanged via an isolated converter and the like.

The term "signal" used herein indicates electric power, examples of which include: electric power with a variable voltage and current, electric power with a constant voltage and current, electric power with a voltage and current having a variable polarity, and electric power with a voltage and current having a constant polarity. That is, examples of the "signal" include: a signal for use in the receiving and transmitting of information, instructions and the like; and electric power used to drive electronic components.

Power supply device 100 will be detailed below. Power supply device 100 includes oscillator 10, controller 20, starter unit 30, rectifying output unit 40, rectifying-smoothing output unit 50, voltage drop section 60, voltage drop section 70, filter circuits 801 and 802, and driver unit 90.

Oscillator 10 is electrically connected to controller 20. Oscillator 10 includes an element, such as a piezoelectric element, a magnetostrictive element, or a combination of a coil and magnet. Then, oscillator 10 outputs alternating-current signal Sac in accordance with the strength of an external force applied to the power supply device. The external force may be vibration, impact, heat, or a magnetic force.

Controller 20 includes measurement terminal 21, voltage measurement unit 22, input terminal 23, control element 24, and power supply terminal 25. Measurement terminal 21 is electrically connected to voltage measurement unit 22. Voltage measurement unit 22 is, e.g. an analog-digital converter. Input terminal 23 is electrically connected to control element 24. Control element 24 may be implemented by a micro control unit (MCU), and a central processing unit (CPU). Power supply terminal 25 is electrically connected to a power supply. The power supply supplies drive power P90 to controller 20. Controller 20 is driven by drive power P90. Here, electric power generated by oscillator 10 is rectified, smoothed, and boosted, thereby producing drive power P90 to be supplied to controller 20. Power supply terminal 25 is electrically connected to driver unit 90 so as to be electrically connected via driver unit 90 to oscillator 10, i.e. the power supply. The power supply may be, e.g. a primary cell or a secondary cell.

Starter unit 30 includes terminals 31 and 32. Terminal 31 is electrically connected to oscillator 10. Terminal 32 is electrically connected to oscillator 10. The circuit from oscillator 10 to terminal 31 is different from the circuit from oscillator 10 to terminal 32 in values of, e.g. impedance, inductance, resistance, and electric capacitance. For this reason, although being connected to one oscillator 10, the circuits provide a difference between voltage V31 applied to terminal 31 and voltage V32 applied to terminal 32.

Starter unit 30 compares voltage V31 applied to terminal 31 with voltage V32 applied to terminal 32. Controller 20 is electrically connected to input terminal 23. When starter unit 30 determines that voltage V31 applied to terminal 31 is equal to or higher than voltage V32 applied to terminal 32, the starter unit outputs voltage V31 applied to terminal 31, as start-up signal Ss, to input terminal 23. When determining that voltage V31 is lower than voltage V32, starter unit 30 does not output voltage V31.

Starter unit 30 is preferably configured such that, when determining that voltage V31 applied to terminal 31 exceeds voltage V32 applied to terminal 32, starter unit 30 outputs voltage V31 applied to terminal 31. In this case, when determining that voltage V31 does not exceed voltage V32, starter unit 30 does not output the voltage. This configuration enhances reliability of power supply device 100. Starter unit 30 may be configured unitarily with controller 20 in such that, for example, controller 20 has the functions of starter unit 30 as well.

Rectifying output unit 40 is electrically connected between terminal 31 and oscillator 10. Rectifying output unit 40 includes rectifier circuit 41. Rectifier circuit 41 is electrically connected to oscillator 10, and converts AC signal Sac from oscillator 10 into signal S1 which is a pulsating current.

Rectifier circuit 41 includes plural diodes D1, D2, D3, and D4 which form a bridge circuit.

Rectifier circuit 41 may be either a half-wave rectifier circuit or a full-wave rectifier circuit. Diodes D1 to D4 may be replaced with other rectifying devices, such as thyristors and or oxide semiconductor field-effect transistors (MOS-FETs).

Rectifying-smoothing output unit 50 is electrically connected between terminal 32 and oscillator 10. Rectifying-smoothing output unit 50 includes rectifier circuit 51 and chargeable unit 52. Rectifier circuit 51 is electrically connected between the oscillator and terminal 32. Rectifier circuit 51 includes plural diodes D3, D4, D5, and D6 which form a bridge circuit. Rectifier circuit 51 converts AC signal Sac from oscillator 10 into a pulsating current, and outputs the pulsating current to chargeable unit 52.

Rectifier circuit 51 may be either a half-wave rectifier circuit or a full-wave rectifier circuit. Diodes D3 to D6 may be replaced with other rectifying devices, such as thyristors or MOS-FETs.

Chargeable unit 52 is electrically connected to a point between rectifier circuit 51 and terminal 32. Chargeable unit 52 includes chargeable element 52C. One end of chargeable element 52C is electrically connected to a node between rectifier circuit 51 and terminal 32 while another end of the chargeable element is electrically connected to a ground. Chargeable unit 52 smooths the pulsating current from rectifier circuit 51, thereby converting the pulsating current to signal S2. Then, chargeable unit 52 outputs resulting signal S2 to the terminal.

Chargeable unit 52 is, e.g. a capacitor. Thus, chargeable unit 52 functions as a delay circuit. Chargeable unit 52 may be, e.g. a coil or a transistor instead.

Diodes D3 and D4 are incorporated into both rectifier circuits 41 and 51. In other words, rectifier circuits 41 and 51 share diodes D3 and D4 between rectifier circuits 41 and 51. The sharing of these diodes between rectifier circuits 41 and 51 reduces the size of the circuits.

Voltage drop section 60 is electrically connected between rectifying-smoothing output unit 50 and terminal 32. Voltage drop section 60 includes resistors R1 and R2. One end of resistor R1 is electrically connected to rectifying-smoothing output unit 50. Another end of resistor R1 is electrically connected to one end of resistor R2 at node P60. Another end of resistor R2 is electrically connected to the ground. Voltage drop section 60 is electrically connected to terminal 32 at node P60 between resistor R1 and resistor R2. That is, voltage drop section 60 is a resistive voltage divider configured to obtain a voltage by decreasing signal S2 that is voltage VS2 of chargeable unit 52 input thereto, and to output, toward terminal 32, signal S4 containing the obtained voltage.

Voltage drop section 60 includes two resistors R1 and R2, the number of the resisters of the section may be three or more, or alternatively one. Resistors R1 and R2 may be either fixed resistors or variable resistors. Voltage drop section 60 may be configured with another type of component, instead of resistor R2, such as capacitors or coils.

Voltage drop section 70 is electrically connected between rectifying output unit 40 and terminal 31. Voltage drop section 70 includes resistors R3 and R4. One end of resistor R3 is electrically connected to rectifying output unit 40. Another end of resistor R3 is electrically connected to one end of resistor R4 at node P70. Another end of resistor R4 is electrically connected to the ground. Voltage drop section 70 is electrically connected to terminal 31 at node P70 between resistor R3 and resistor R4. That is, voltage drop section 70 is a resistive voltage-divider circuit that obtains a voltage by decreasing the voltage of signal S1 and outputs, toward terminal 31, signal S3 containing the obtained voltage.

Voltage drop section 70 includes two resistors R3 and R4, the number of the resisters of the section may be three or more, or alternatively one. Resistors R3 and R4 may be either fixed resistors or variable resistors. Voltage drop section 70 may be configured with another type of component, instead of resistor R4, such as capacitors or coils.

A relationship between voltage drop sections 60 and 70 will be described below. Voltage drop ratio F60 of voltage drop section 60 is larger than voltage drop ratio F70 of voltage drop section 70. Such configurations of voltage drop ratio F60 and voltage drop ratio F70, allow starter unit 30 to compare the voltages more accurately.

Voltage drop ratio F60 of voltage drop section 60 is given by the following equation with the voltage V2 of signal S2 input to resistor R1 and the voltage V4 at node P60 output from resistor R1.

$$F60 = (V2{-}V4)/V2$$

Voltage drop ratio F70 of voltage drop section 70 is given by the following equation with the voltage V1 of signal S1 input to resistor R3 and the voltage V3 at node P70 output from resistor R3.

$$F70 = (V1{-}V3)/V1$$

In other words, voltage drop sections 60 and 70 are determined such that, when the same voltage is supplied to both voltage drop sections 60 and 70, the voltage output from voltage drop section 60 is lower than the voltage output from voltage drop section 70.

Filter circuit 801 is electrically connected between voltage drop section 60 and terminal 32. Filter circuit 802 is electrically connected between voltage drop section 70 and terminal 31. Filter circuit 801 eliminates noises in signal S4 input from voltage drop section 60, and outputs, to terminal 32, the signal S4 having noises eliminated. Filter circuit 802 eliminates noises in signal S3 input from voltage drop section 70, and outputs, to terminal 31, signal S3 having noises eliminated. This configuration prevents noises from being mixed into the signals to input to terminals 31 and 32.

Filter circuit 801 is preferably connected electrically between voltage drop section 60 and terminal 32. Filter circuit 802 is preferably connected electrically between voltage drop section 70 and terminal 31. However, filter circuit 801 may not necessarily be electrically connected between voltage drop section 60 and terminal 32, and filter circuit 802 may not necessarily be electrically connected between voltage drop section 70 and terminal 31. Alternatively, filter circuit 802 may be electrically connected between voltage drop section 70 and terminal 31, and filter circuit 801 may not be electrically connected between voltage drop section 60 and terminal 32. Thus, the filter circuit (801, 802) may be electrically connected to at least one of between voltage drop section 60 and terminal 32 and between voltage drop section 70 and terminal 31.

Driver unit 90 is electrically connected between rectifying-smoothing output unit 50 and voltage drop section 60, and is electrically connected to power supply terminal 25. Driver unit 90 is implemented by, e.g. a DC-DC converter. Driver unit 90 converts the voltage output from rectifying-smoothing output unit 50 into a voltage capable of driving controller 20, and outputs the resulting voltage. In other words, driver unit 90 converts signal S2 into drive power P90 configured to drive controller 20. This configuration, power supply device 100 uses signal S2 as power for driving controller 20.

An operation of power supply device 100 will be described below. Upon having a force applied from the outside of power supply device 100, for example, oscillator 10 generates alternating-current (AC) signal Sac. AC signal Sac is output to both the circuit routed to terminal 31 via rectifying output unit 40 and the circuit routed to terminal 32 via rectifying-smoothing output unit 50.

Rectifying output unit 40 converts AC signal Sac into signal S1, a pulsating current, and then, outputs the converted signal. On the other hand, rectifying-smoothing output unit 50 converts AC signal Sac into signal S2, and then, outputs the converted signal. Rectifying-smoothing output unit 50 includes chargeable element 52C. Thus, signal S2 output from rectifying-smoothing output unit 50 is closer to a direct current than signal S1 is. That is, signal S2 is a direct current or a direct current containing a ripple. Signals S1 and S2 each contain a direct current component and a ripple superimposed on the direct current component. The ratio of the amplitude of the ripple in signal S2 closer to a direct current than signal S1 to the magnitude of the direct current component of signal S2 is smaller than the ratio of the amplitude of the ripple in signal S1 to the magnitude of the direct current component of signal S1.

Signal S1 is input to voltage drop section 70. Voltage drop section 70 decreases the voltage of signal S1, and outputs signal S3 that contains the thus-decreased voltage. Signal S2 is input to voltage drop section 60. Voltage drop section 60 decreases the voltage of signal S2, and outputs signal S4 that contains the thus-decreased voltage. Here, voltage drop section 60 decreases the voltage more than voltage drop section 70.

Signal S4 from oscillator 10 via voltage drop section 60 is input to terminal 32 of starter unit 30 and thus, the voltage of signal S4 is applied to terminal 32.

Signal S3 from oscillator 10 via voltage drop section 70 is input to terminal 31 of starter unit 30, and thus, the voltage of signal S3 is applied to terminal 31. Starter unit 30 compares the voltage applied to terminal 31 with the voltage applied to terminal 32. When determining that the voltage applied to terminal 31 is higher than the voltage applied to terminal 32, starter unit 30 outputs start-up signal Ss to control element 24. When determining that the voltage applied to terminal 31 is not higher than the voltage applied to terminal 32, starter unit 30 does not output start-up signal Ss.

Controller 20 receives drive power P90 that is supplied from driver unit 90, thereby being driven. Drive power P90 is supplied to control element 24 via power supply terminal 25. Start-up signal Ss is input to control element 24 via terminal 23. Upon detecting start-up signal Ss, control element 24 starts a predetermined operation.

Power supply device 100 includes voltage drop section 60 that decreases voltages more than voltage drop section 70. Voltage V32 of signal S4 input via voltage drop section 60 is compared with voltage V31 of signal S3 input via voltage drop section 70. Voltage drop sections 60 and 70 are electrically connected to oscillator 10. Therefore, voltage V31 of signal S3 via voltage drop section 70 is lower than voltage V32 of signal S4 via voltage drop section 60. In other words, while controller 20 is driven, the starting-up of operation of controller 20 depends on generation of alternating-current signal Sac by oscillator 10. For this reason, power supply device 100 reliably started up by the start-up of oscillator 10.

An operation of power supply device 100 in the case where oscillator 10 is used as a power supply for driving controller 20 will be described below. While oscillator 10 continuously generates alternating-current signal Sac without interruption, chargeable element 52C is charged, so that the voltage of signal S2, i.e. charging voltage VS2 of chargeable element 52C, rises accordingly. Driver unit 90 has predetermined threshold voltage Ph90. When charging voltage VS2, i.e., the voltage of signal S2 reaches threshold voltage Ph90, driver unit 90 converts signal S2 into drive power P90 having a voltage suited for driving controller 20, and outputs the resulting drive power. Drive power P90 is input to power supply terminal 25, thereby driving control element 24.

Upon receiving start-up signal Ss from starter unit 30, control element 24 causes voltage measurement unit 22 to measure charging voltage VS2. Then, when the voltage measured by voltage measurement unit 22 reaches a voltage set for control element 24 or higher, control element 24 performs a predetermined operation. The voltage set for control element 24 is preferably equal to the voltage required for control element 24 to operate. The above configuration of power supply device 100 provides advantages for power supply device 100 including: elimination of the need for a battery, and power savings.

Power supply device 100 may include plural oscillators 10. In this case, alternating-current signals Sac which is output from plural oscillators 10 are preferably combined after these signals are separately rectified.

(Sensor Device 200)

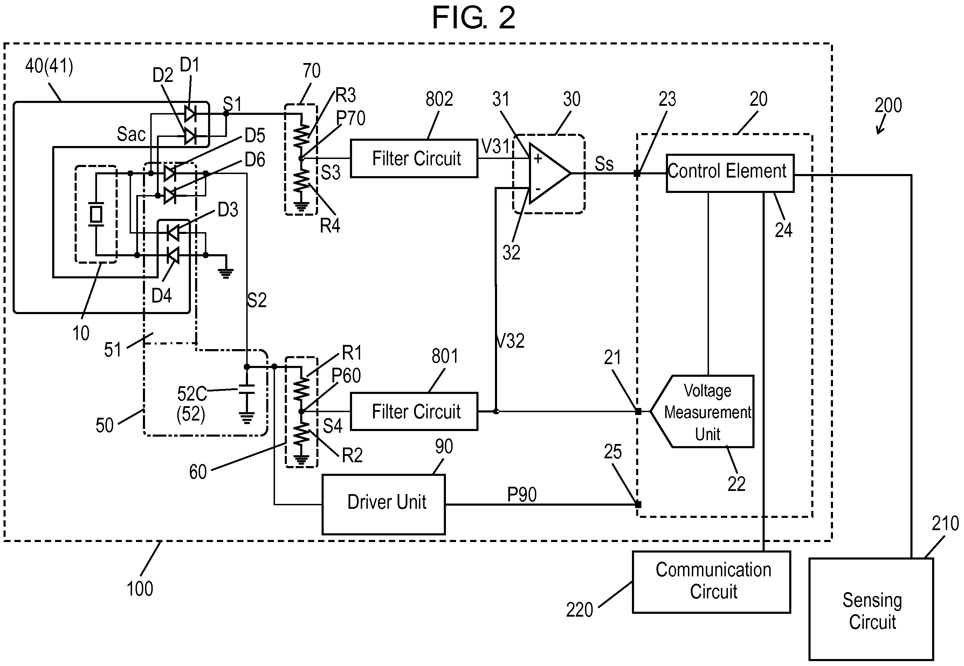

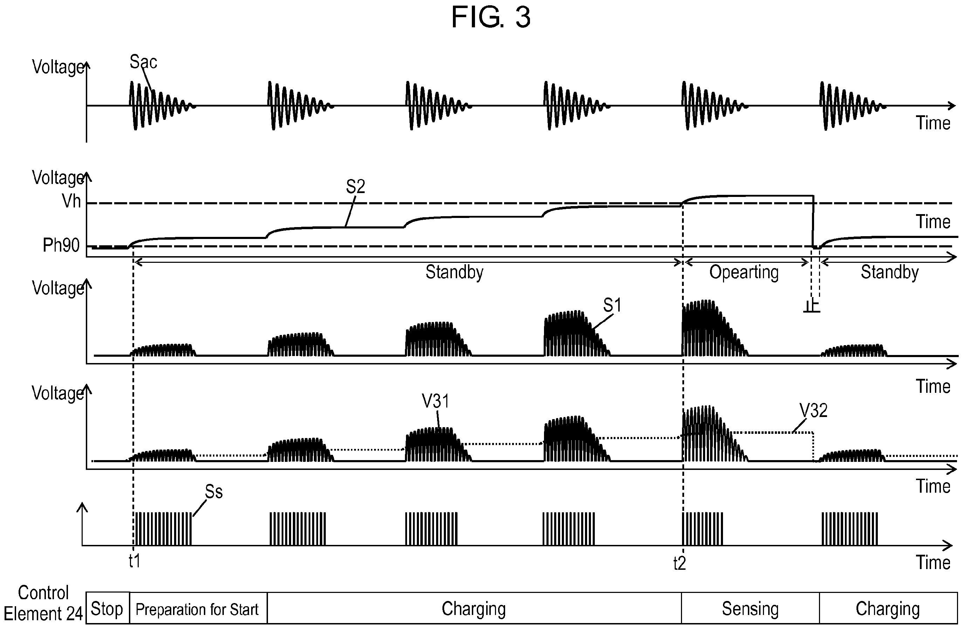

FIG. 2 is a circuit diagram of sensor device 200 according to the embodiment. FIG. 3 illustrates an operation of sensor device 200.

Sensor device 200 includes power supply device 100, sensing circuit 210, and communication circuit 220. Sensing circuit 210 is electrically connected to control element 24. Communication circuit 220 is electrically connected to control element 24. Sensing circuit 210 detects information of, e.g. temperature, humidity, impact, vibration, acceleration, weight, or pressure. Then, sensing circuit 210 outputs the detected information to control element 24. Control element 24 outputs the information detected by sensing circuit 210 to external devices by communication circuit 220. Controller 20 may include a memory which stores the information detected by sensing circuit 210.

In sensor device 200, the information detected by sensing circuit 210 is preferably relevance to the conditions for generation under which oscillator 10 generates alternating-current signal Sac. For example, in oscillator 10 which is a vibration power-generation element, external forces which can meet the required conditions for generating alternating-current signal Sac are, e.g. vibration and impact. Accordingly, preferable examples of sensing circuit 210 are ones capable of detecting external mechanical forces, including a pressure sensor and an acceleration sensor. In this configuration, when receiving start-up signal Ss input from starter unit 30, sensor device 200 starts up controller 20 to detect the information. In other words, sensor device 200 is not required to cause controller 20 to be driven all the time, and the controller may be in sleep mode, i.e. on standby, such that the controller can start up upon receiving start-up signal Ss. This results in power savings to sensor device 200.

An operation of sensor device 200 will be described below with referring to FIG. 3. FIG. 3 shows the voltage of alternating-current signal Sac, the voltage of signal S1, voltage VS2 of signal S2, the voltages of signals S3 and S4, and start-up signal Ss. In FIG. 3, the horizontal axis represents time while the vertical axis represents values of the voltages. In the embodiment, sensor devices 200 are embedded in a shoe to detect tread pressures. To this end, each of sensing circuits 210 includes a pressure sensor. Moreover, each of oscillators 10 includes a vibration power-generation element. The vibration power-generation element may be a piezoelectric element formed on a substrate. One end of the piezoelectric element formed is fixed and held. The vibration power-generation element may be a magnetostrictive element formed on a substrate, and one end of the magnetostrictive element is fixed and held. These vibration power-generation elements each generate alternating-current signal Sac when the substrates are subjected to vibration.

Motions of a user wearing shoes causes each of sensor devices 200 to be subjected to external forces, such as impacts of landing of the shoes on the ground. The impacts cause oscillator 10 to generate alternating-current signals Sac. Such impacts occur when the user walks and runs. Therefore, alternating-current signal Sac is generated consecutively.

Alternating-current signal Sac is output to rectifier circuit 41 constituted by diodes D1 to D4, and is converted by the circuit into signal S1, i.e. a pulsating current. That is, alternating-current signal Sac is converted to signal S1 by rectifying output unit 40.

Alternating-current signal Sac is output also to rectifier circuit 51 constituted by diodes D3 to D6. Alternating-current signal Sac is converted by both rectifier circuit 51 and chargeable element 52C, and is then output as signal S2 which is closer to a direct current than signal S1 is. That is, alternating-current signal Sac is converted to signal S2 by rectifying-smoothing output unit 50. As shown in FIG. 3, charging voltage VS2, i.e. the voltage of signal S2, rises every time alternating-current signal Sac is input to rectifying-smoothing output unit 50.

Signal S1 is input to voltage drop section 70. Then, signal S1 is converted by voltage drop section 70 into signal S3 that has a voltage obtained by multiplying the voltage of signal S1 by $1/n$ ($n \geq 1$). On the other hand, signal S2 is input to voltage drop section 60. Then, signal S2 is converted by voltage drop section 60 into signal S4 that has a voltage obtained by multiplying the voltage of signal S2 by $1/N$ ($N \geq 1$, $N > n$).

Signal S2 is input to driver unit 90 as well. For driver unit 90, predetermined threshold voltage Ph90 is set. At time point t1 when the voltage of signal S2 reaches a voltage equal to or hogher than threshold voltage Ph90, driver unit 90 is driven to output drive power P90. When receiving drive power P90, control element 24 shifts to a sleep mode, i.e. on standby for start-up.

Signal S3 which has the voltage obtained by multiplying the voltage of signal S1 by $1/n$ is input to terminal 31. Signal S4 which has the voltage obtained by multiplying voltage VS2 of signal S2 by $1/N$ is input to terminal 32. When the voltage of signal S3 at terminal 31 is equal to or higher than the voltage of signal S4 at terminal 32, starter unit 30 outputs start-up signal Ss to control element 24.

In the sleep mode, control element 24 causes voltage measurement unit 22 to measure charging voltage VS2 of chargeable element 52C. The voltage measured by voltage measurement unit 22 is $1/N$ times charging voltage VS2 of chargeable element 52C. Therefore, control element 24 calculates charging voltage VS2 of chargeable element 52C from the measured voltage by multiplying the measured voltage by N. Here, in response to the inputting of start-up signal Ss to control element 24, voltage measurement unit 22 measures the state of charge. Then, while charging voltage VS2 rises to a voltage equal to or higher than predetermined sensing voltage Vh, control element 24 starts up at time point t2 when the control element receives start-up signal Ss, thereby detecting the resistance of the pressure sensor of sensing circuit 210.

Then, control element 24 calculates a tread pressure from the resistance of the pressure sensor of sensing circuit 210. Then, control element 24 outputs, to communication circuit 220, the tread pressure obtained from sensing circuit 210. Communication circuit 220 transmits the tread pressure to the external equipment via wired or wireless communication. Such operations of control element 24 decreases charging voltage VS2 of chargeable element 52C.

Then, when charging voltage VS2 of chargeable element 52C becomes lower than sensing voltage Vh, control element 24 shifts to the sleep mode and halts its operation. That is, while chargeable element 52C charged to have charging voltage VS2 equal to or higher than predetermined sensing voltage Vh, control element 24, i.e. controller 20, starts up from the sleep mode upon receiving start-up signal Ss, and then, continuously operate. After that, when charging voltage VS2 becomes lower than sensing voltage Vh, control element 24 shifts to the sleep mode.

Sensor device 200 is configured in this way. Sensor device 200 starts up controller 20, i.e. control element 24, by starter unit 30 at timing of the sensing by sensing circuit 210, i.e. at timing at which oscillator 10 detects an external force. This configuration provides controller 20 with power efficiently. That is, sensor device 200 has power savings in sensing operation.

Voltage V32 input to terminal 32 is lower than voltage V31 input to terminal 31. For this reason, starter unit 30 can output start-up signal Ss to controller 20 even when voltage V31 input to terminal 31 is low.

REFERENCE MARKS IN THE DRAWINGS

| | |
|---|---|
| 10 | oscillator |
| 20 | controller |
| 21 | measurement terminal |
| 22 | voltage measurement unit |
| 23 | input terminal |
| 24 | control element |
| 25 | power supply terminal |
| 30 | starter unit |
| 31 | terminal (first terminal) |
| 32 | terminal (second terminal) |
| 40 | rectifying output unit |
| 41 | rectifier circuit |
| 50 | rectifying-smoothing output unit |
| 51 | rectifier circuit |
| 52 | chargeable unit |
| 52C | chargeable element |
| 60 | voltage drop section (first voltage drop section) |
| 70 | voltage drop section (second voltage drop section) |
| 90 | driver unit |
| 100 | power supply device |
| 200 | sensor device |
| 210 | sensing circuit |
| 220 | communication circuit |
| 801, 802 | filter circuit |
| D1 to D6 | diode |
| R1 to R4 | resistor |

**Claims**

1. A power supply device comprising:

   an oscillator configured to output an alternating-current (AC) signal in accordance with strength of an external force;
   a rectifying output unit configured to convert the AC signal to a first signal which is a pulsating current;
   a rectifying-smoothing output unit configured to convert the AC signal to a second signal which is closer to a direct current than the first signal is;
   a starter unit including

      a first terminal electrically connected to the rectifying output unit, and
      a second terminal electrically connected to the rectifying-smoothing output unit, the starter unit outputting a start-up signal when a voltage applied to the first terminal is equal to or higher than a voltage applied to the second terminal; and

   a controller starting up in response to the start-up signal.

2. The power supply device of claim 1,

   wherein the rectifying output unit includes a first rectifier circuit electrically connected between the oscillator and the first terminal, and
   wherein the rectifying-smoothing output unit includes:

      a second rectifier circuit electrically connected between the oscillator and the second terminal; and
      a chargeable unit electrically connected between the second rectifier circuit and the second terminal.

3. The power supply device of claim 2,

   wherein the first rectifier circuit includes a plurality of first diodes, and

wherein the second rectifier circuit includes a plurality of second rectifier diodes including at least one of the plurality of the first diodes of the first rectifier circuit.

4. The power supply device of claim 2, wherein the chargeable unit includes a chargeable element having one end and another end, the one end of the chargeable element being connected between the second rectifier circuit and the second terminal, the another end of the chargeable element being connected to a ground.

5. The power supply device of claim 1, further comprising a first voltage drop section configure to decrease a voltage of the second signal.

6. The power supply device of claim 2, further comprising a second voltage drop section configure to decrease a voltage of the first signal.

7. The power supply device of claim 6, wherein a voltage drop ratio at which the first voltage drop section decreases the voltage of the first signal is higher than a voltage drop ratio at which the second voltage drop section decreases the voltage of the second signal.

8. The power supply device of claim 7, further comprising a filter circuit electrically connected at least one of between the first voltage drop section and the second terminal, and between the second voltage drop section and the first terminal.

9. The power supply device of claim 1, further comprising a driver unit configured to convert the second signal to a power driving the controller.

10. The power supply device of claim 9,

wherein the rectifying output unit includes a first rectifier circuit electrically connected between the oscillator and the first terminal,
wherein the rectifying-smoothing output unit includes:

a second rectifier circuit electrically connected between the oscillator and the second terminal; and
a chargeable unit electrically connected between the second rectifier circuit and the second terminal,

wherein the starter unit outputs the start-up signal to the controller when the voltage applied to the first terminal is equal to or higher than the voltage applied to the second terminal, and
wherein the controller includes:

a measurement terminal electrically connected to the chargeable unit;
a voltage measurement unit electrically connected to the measurement terminal, the voltage measurement unit measuring a charging voltage of the chargeable unit;
an input terminal electrically connected to the starter unit; and
a control element starting up in response to the start-up signal input to the input terminal.

11. The power supply device of claim 1, wherein the starter unit is disposed in the controller such that the starter unit is configured unitarily with the controller.

12. The power supply device of claim 1, wherein the starter unit starts up the controller when the voltage applied to the first terminal exceeds the voltage applied to the second terminal.

13. A sensor device comprising:

an oscillator configured to output an alternating-current (AC) signal in accordance with strength of an external force;
a rectifying output unit configured to convert the AC signal to a first signal which is a pulsating current;
a rectifying-smoothing output unit configured to convert the AC signal to a second signal which is closer to a direct current than the first signal is;
a starter unit including

a first terminal electrically connected to the rectifying output unit, and
a second terminal electrically connected to the rectifying-smoothing output unit, the starter unit outputting a start-up signal when a voltage applied to the first terminal is equal to or higher than a voltage applied to the second terminal;

a controller including a control element starting up in response to the start-up signal input to the control element;
a sensing circuit configured to detect information and outputting the information to the control element; and
a communication circuit configured to output the information.

FIG. 1

FIG. 2

EP 3 623 768 A1

# FIG. 3

EP 3 623 768 A1

## INTERNATIONAL SEARCH REPORT

| | International application No. |
|---|---|
| | PCT/JP2018/015757 |

**A. CLASSIFICATION OF SUBJECT MATTER**
Int.Cl. G01D5/244(2006.01)i, G01D21/00(2006.01)i, H02M7/06(2006.01)i

According to International Patent Classification (IPC) or to both national classification and IPC

**B. FIELDS SEARCHED**

Minimum documentation searched (classification system followed by classification symbols)
Int.Cl. G01D5/244, G01D21/00, H02M7/06

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-195651 A (PANASONIC IP MANAGEMENT CORP.) 05 November 2015, paragraphs [0013]-[0056], fig. 1-9 (Family: none) | 1-13 |
| A | JP 2008-186336 A (YASKAWA ELECTRIC CORP.) 14 August 2008, paragraphs [0009]-[0030], fig. 1-13 (Family: none) | 1-13 |
| A | JP 2013-223347 A (PANASONIC CORP.) 28 October 2013, paragraphs [0010]-[0033], fig. 1-11 (Family: none) | 1-13 |

☐ Further documents are listed in the continuation of Box C.   ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 07 May 2018 (07.05.2018) | 15 May 2018 (15.05.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008186336 A